# EUROPEAN PATENT APPLICATION

(11) **EP 0 811 473 A2**
(43) Date of publication of application: **10.12.1997**
(21) Application number: 97108831.5
(22) Date of filing: 02.06.1997
(51) Int. Cl.: B29C 65/18

(54) **Heat seal web saver**

(30) Priority: 03.06.1996 US 657230
(71) Applicant: McNEIL-PPC, INC., Skillman, NJ 08558 (US)
(72) Inventor: Gentzel, Frederick F., Flemington, NJ 08822 (US); Rex, Gerd R., Somerset, NJ 08873 (US)
(74) Representative: Strehl Schübel-Hopf Groening & Partner

(57) **Abstract**

A method and apparatus for heating sealing a web (50) of thermoplastic or thermosetting material are disclosed. The apparatus includes a heated rotary die (210) that cooperates with an anvil (200) at a nip point to bond the web. The web has been pre-heated by being wrapped around portion of the perimeter of the drum (210). When the production of the web is interrupted, web saver rolls (100,110) lift the web away from the die so that the heated surface does not melt or otherwise damage the material.

## Description

The present invention relates to a method and apparatus for heat sealing flexible polymeric films, wherein webs of materials are laminated together using heat and pressure. More particularly, the present invention relates to a method and apparatus for creating a composite web useful in making absorbent articles such as sanitary napkins and diapers.

### Background of the Invention

Traditional "line contact" heat sealing of moving webs, utilizing a rotary die and anvil, is speed limiting because there is a very short duration during which the materials to be joined are brought together under heat and pressure without damaging the web and producing waste. Typically, when making webs used in absorbent articles, the webs travel at 200-300 feet per minute (1.0-1.5 m/s), the actual dwell time beneath the nip of the heat seal die and anvil being on the order of milliseconds, an insufficient time to elevate the webs to a temperature appropriate for thermal sealing. To transfer sufficient heat to the webs, it is customary to increase the die and anvil temperatures to nearly the melting point temperature of the webs and increase the joining or "nip" pressure as well. However, it has been found that this approach does little to improve the seal strength and uniformity, and increases the amount of damage to the substrates by producing localized melting resulting in the formation of pin-holes in the area of the heat seal.

It is also known in the art to seal two substrates by mechanically crimped bonds that employ a thermal-mechanical penetration of one substrate into the other, sometimes bridging a tissue layer. This type of seal suffers from several drawbacks, primarily in that it is weaker per unit area than a comparably sized thermal-mechanical seal. Thus, in order to provide a seal of adequate strength, mechanically crimped products have flanges that are usually about two to five times wider than those that are thermally sealed. Additionally, mechanically crimped seals are fluid pervious at the interface between the substrates. These problems can be mitigated to a small degree by applying bonding adhesive to the substrates in the sealing region of the flanges to improve seal strength and decrease permeability. This solution, however, increases the complexity of the manufacturing equipment and the cost of the product.

A heat sealing apparatus is disclosed in U.S. Patent No. 4,419,167--Hay II et al. that provides extended heat to thermally seal two substrates. The apparatus disclosed includes sets of parallel axes, and is mechanically complex and expensive. Moreover, it is not apparent that the disclosed system is useful within substrates.

Thus, it is desirable to devise a system to transfer heat to the thermally reactive, i.e., thermoplastic or thermosetting fusible webs which are thereby thermobondable, that are to be joined without causing any physical damage due to elevated die and anvil temperatures and pressures.

### Summary of the Invention

It is an object of this invention to provide a method and apparatus which improves the quality of a heat seal in a thermally reactive fusible web without increased additions of heat to the anvil and die.

It is another object of the present invention to provide methods and apparatus for preheating the webs whereby strong, uniform seals are produced without creating pin holes.

It is an additional object of the present invention to provide such methods and apparatus for preheating thermobondable webs that are capable of operating at relatively fast web speeds.

It is an additional object of the present invention to provide a method and apparatus that reduces the amount of heat and pressure required to maintain and provide an effective thermobond.

Still another object of the present invention is to provide articles of thermoplastic materials which minimize the leakage of liquids, superabsorbent powders, and the like from the edges of such articles.

It has now been found that strong, uniform seals may be produced in a thermobondable web, without creating pin holes, by pre-heating the web by means of wrapping the thermobondable web material to be joined around a heated rotary die. When the thermobondable web is not travelling through the heat seal station, a separating device comprised of web saver rollers removes the web from the heated rotary die surface, thereby avoiding unwarranted melting, sticking or other types of heat-related damage to the web.

In accordance with the present invention, there has been provided an improved rotary heat seal die apparatus having one or more take up rollers and one or more web saver rollers, wherein the web saver rollers are movable from a first position to a second position and are disposed adjacent the die, such that in a first position the web is wrapped around a portion of a heated rotary die where it is pre-heated, and in a second position the web is lifted off the heated rotary die and is disposed between one or more take up rollers and the web saver rollers so that it no longer contacts the heated rotary die when the rotary heated die is idle. It is preferred that the apparatus also include a system for moving the one or more web saver rollers in incremental fashion. It is further preferred that two web saver rollers are provided. Most preferably, the web initially contacts the die at a point displaced 180° from the nip point. In certain embodiments, an additional take up roller disposed adjacent to the die and between the nip point and a point at which the web first contacts the die can be provided to alter the amount of web that is wrapped around the die.

In an optional embodiment of the invention, the rotary die is pocketed, i.e., it contains recessed areas, having a raised perimeter around the recessed area which defines the sealing pattern coming into contact with the web and the web saver rollers also contains recessed areas having a sealing pattern substantially the same as the sealing pattern on the rotary die. As a result, only the sides of the product being laminated cones in contact with the heated die surface, thereby avoiding any undesirable heat damage to the centrally located components of the product.

In accordance with this aspect of the present invention there has been provided an apparatus for thermally bonding a web comprised of at least one thermally fusible substrate, the apparatus comprising a heated rotary sealing die, a heated rotary sealing anvil, one or more take up rollers and one or more web saver rollers. Take up rollers direct the web into contact with the die at a point angularly displaced from a nip point where the die and anvil seal the web. The web saver rollers are movable from a first position to a second position and are disposed adjacent the die, such that in a first position the web is wrapped around a heated rotary die where it is preheated, and in a second position the web is lifted off the heated rotary die and is disposed between one or more take up rollers and the web saver rollers so that it no longer contacts the heated rotary die when the rotary heated die is idle.

### Brief Description of the Drawings

FIG. 1 is a schematic side elevational view depicting a web sealing apparatus made in accordance with the present invention in the production position; and
FIG. 2 is a schematic similar to FIG. 1 in which the web sealing apparatus is shown in a second position used when the web is idle.

### Detailed Description of the Invention

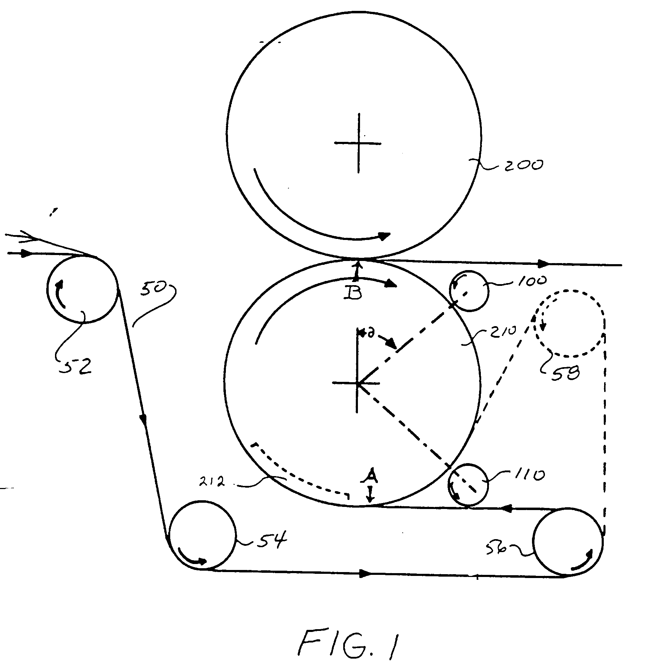

Referring now to FIG. 1, there is illustrated a schematic representation of an embodiment of the apparatus of the present invention. Those of ordinary skill in the art will be fully familiar with the machinery to which the preferred embodiments of the present invention are directed, and the schematics provided serve to illustrate the principles of the present invention. It is understood, therefore, that the apparatus depicted schematically will also include a number of additional components such as drive mechanisms, support structures, and shrouds or covers for safety environmental protection and the like. However, these components are not essential parts of the present invention and are therefore not depicted.

As illustrated, the main components of the system include a rotary heat seal anvil 200 and a rotary heat seal die 210. In a typical operation, a web 50 that is to be sealed is transported using take up rollers 52,54,56 and is wrapped around the heat seal die 210. In the embodiment shown, the degree of wrapping around the heat seal die 210 is about 180°. The heat seal anvil 200 and heat seal die 210, as is known in the art, are brought into close proximity at a nip point B so that when a web of material is transferred between them, a bond is formed by heat and pressure to create a sealed web 50'. When thermally reactive, i.e., thermoplastic or thermosetting, fusible webs are brought together in this manner, i.e., when one or both webs are preheated, it has been found that the resulting bond is of high strength and low deformation.

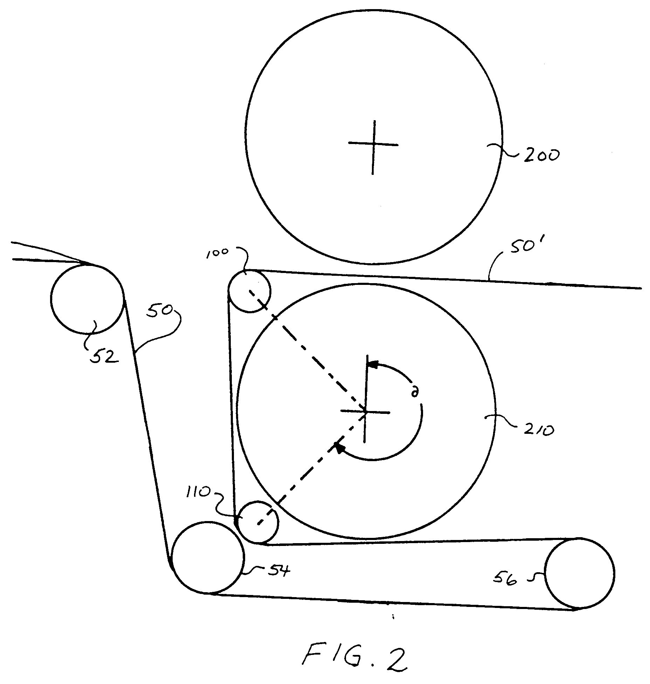

In accordance with the present invention, web saver rollers 100,110 are provided and as shown in Fig. 1 in the heat sealing configurations used in production. The web saver rollers 100, 110 are attached to a movable structure or structures, not illustrated, that are described below in reference to FIG. 2. In this configuration, they are retracted in a first position to allow the web 50 to be in full contact with the die 210 from point A, around to the sealing point or nip point B where the anvil 200 and die 210 meet 52,54 and 56. If only one web needs to be preheated it is preferred that only the web that is in contact with the relief portion of the die be heated, thereby permitting heat to be transferred only to the portion of the web to be bonded, and not to the entire surface of the thermoplastic film or to the other web material. Preheating permits the use of lower die temperatures and lower sealing pressures at the nip point B, thereby minimizing the formation of pinholes and other damage due to overheating the web material.

In alternative embodiments, the number of web saver rollers 100,110 can be increased or decreased from the two shown and described above. Thus, a third, fourth or additional web saver rollers can be added; or the number of web saver rollers can be reduced to one. In the latter embodiment, less heat in proportion to the number of web saver rollers will be provided due to increasingly reduced contact between the web 50 and the die 210. The diameters of the web saver rollers 100,110 can also be varied. By increasing the web saver roller diameters the web will be further insulated from the heat of the die 210. The rate and degree of the rotation of the web saver rollers 100, 110, and consequently the degree of the separation of the web 50 from the rotary die 120 can be controlled by a pneumatic rotoactuator or a servo motor stepping device, the construction and operation of which are both well known in the art.

Referring now to FIG. 2, the apparatus depicted in FIG. 1 is now illustrated in the "stop" or "save" configuration in which the apparatus continues to run, but the web 50 remains idle. As shown in FIG. 2, the web saver rollers 100,110 have been moved into a second position where they separate and lift the web 50 from the hot surface of the die 210, now stationary. Without the web saver rollers 100,110 moving into the illustrated position or a similar position, the section of the web 50 wrapped around the now stationary die 210 would deform, melt or suffer thermal damage. The apparatus resumes operation when rolls 100,110 are again retracted into the position shown in FIG. 1, thereby again allowing the die 210 to pre-heat the web 50 before it is sealed. As mentioned above, the web saver rollers 100, 110 are moved from the first position to the second position by moving pivotable arms or similar structures to which they are attached.

It will be understood by comparing Fig.1 and FIG. 2, that if the web saver rollers 100, 110 are placed at an intermediate position, the web 50 would be wrapped around less than 180° of the perimeter of die 210. This may be desirable for materials that need less pre-heating or for slower operating speeds. In certain embodiments, it may even be desirable to slowly move the web saver rollers 100, 110 from the position shown in FIG. 2 to the position shown in FIG. 1 in order to provide a progressively increasing amount of pre-heating to optimize the process parameters and to accommodate conditions such as machine ramping when the apparatus is being brought from full stop to full production speed.

The embodiment illustrated and described has been successfully tested with thin webs and is also useful with thicker webs or pads of material. In one embodiment shown in FIGS. 1-2, profiled surface of the web 50 nests in a pocketed region 212 of the die 210, while the anvil 200 has a smooth surface. In this case, the web saver rollers 100,110 should be as large as practical and are most preferably about 25% of the die diameter. In an alternate embodiment, the profiled or raised portion of the web 50 could ride away from the die 210, and the anvil 200 would thereby have a plurality of pockets (not shown), as would the feed rolls, 52, 54 and 56. In such an embodiment, the web saver rollers 100, 110 would be smaller than those of the first embodiment described immediately above-preferably about 10% of the die diameter.

The embodiment depicted in FIGS. 1-2 illustrates a system in which the web is wrapped over about one half, i.e., 180°, of the perimeter of the die 210. However, it will be understood that alternative embodiments could use a greater portion of the perimeter of the die 210, e.g., 270° or 330°. The only limitation on the upper bound of 360° is that of the space adjacent the die 210 which is occupied by the web saver rollers 100,110 and other hardware. A maximum or near maximum degree of wrap around die 210, and thereby of pre-heat, would be achieved by using the additional feed roller 58 shown in phantom in FIG. 1.

The present invention thus also discloses improved methods for thermally bonding a web of at least one thermally fusible substrate by directing the web into contact with a heated rotary die at a point angularly displaced from and before reaching a nip point where the die and an anvil seal the web. In accordance with the present invention, one or more web saver rollers are moved from between a first position and a second position, such that in a first position the web is wrapped around the die to be pre-heated, and in a second position the web is lifted off the die and is stretched between the take up rollers and the web saver rollers. As explained above, it is preferred that the step of moving the web saver rollers be carried out incrementally.

The present invention is advantageously employed on absorbent products that have a peripheral flange seal that joins a perforated thermoplastic facing material to a non-perforated polymeric backing material. Typical facing materials include: thermoplastic coated materials such as rayon which is resin or otherwise coated with a thermoplastic layer; polyolefin films and fabrics; nonwoven fabrics such as are made of hydroentangled polyester and/or polypropylene, resin bonded polyester and/or polypropylene nonwovens, spunbonded polyester and/or polypropylene nonwovens, thermobonded polyester and/or polypropylene nonwovens, melt blown polypropylene and/or polyester nonwovens. Fabrics may also contain fibers such as nylons, polyacrylates, polyurethanes, bicomponent fibers, combinations of these and combinations of the above described polyolefins. The bicomponent fibers may be of any combination of low and high melting components such as polyethylene and polyester, polypropylene and polyester, polyethylene and polypropylene and low and high melting polyesters. The fabrics may also contain nonfusable fibers such as rayon, cotton and wool pulp to an extent that still permits the fabric to be fusible. If at least one of the substrates is flexible, the fabric may then be made entirely of nonfusible fibers. The fibers may be made of polyethylene of different densities or of polypropylene. The films may be perforate or nonperforate. The films may also be composites or laminates with other films and/or fabrics. The films may also contain other polymers such as those of polyethylene vinylacetate, nylons, polyurethanes, polyvinyldene chloride, polyvinylalcohol, polyvinylchloride and the like. Representative thermoplastic fibers are made from polyethylene, polyester, cellulose acetate, polypropylene, copolymers of ethylene and propylene, copolymers of ethylene and vinylacetate, copolymers of propylene and other 1-olefins such as 1-butene, 4-methyl-pentene-1, and 1-hexene, nylons, polyesters and polyether polyurethanes, polyvinyledine chloride, polyvinylchloride, polyvinylalcohol and polyacrylates. Grafted polyolefins pulps may also be used, in which maleic anhydride or styrene groups are grafted onto the pulp. In some embodiments, the thermoplastic fibers are composed solely of one type of thermoplastic. In other embodiments, they are composed of mixtures of two or more types of thermoplastic fibers. Bicomponent fibers, such as are described above may also be used.

Typical backing materials may include perforate and nonperforate films such as polyethylene film, polypropylene films, polyethylene vinylacetate, as well as co-extruded films such as polyethylene and the like. Examples of thermobondable materials that contain less than 100% thermally activatable components are those of fibrous wood pulp or tissue interposed between thermoplastic films. In accordance with this aspect of the invention, any combination of film, non-woven, woven, or knitted material can be used as a substrate and laminated or sealed together with another layer provided at least one of the substrates is thermally reactive, i.e., a fusible thermoplastic or thermosetting material.

The present invention provides a number of advantages over the systems disclosed in the prior art. In particular, the web speed can be increased by about 50% while the amount of energy required is reduced because the temperature of the anvil and die are reduced. This latter factor also provides improvements in both the strength of the bond and eliminates pinholes. The present invention thus permits the rotary heat sealing of the multiple component substrates of a composite web at line speeds greater than the rotary heat sealing devices of the prior art. Additionally, the methods and apparatus described herein produce a bond that is stronger and also is less likely to exhibit pinholes or other defects, thereby reducing waste.

In accordance with one aspect of the present invention, a mixture comprised of fibers of at least one thermoplastic material and other fibers, such as wood pulp fibers, is thermobonded together by heating the mixture to a temperature above the melting point of the fibers of at least one thermoplastic material in the mixture. The mixture may be deposited on a traveling perforate or nonperforate belt and passed through the rotary heat seal apparatus. The resulting web or sheet is used to form pads or other articles or the core for laminated articles that have absorbent and/or absorbent components. These mixtures may include thermoplastic fibers and wood pulp fibers in varying percentages depending upon the desired application of the material and to modify the process characteristics of blending, and the degree of thermobonding. Wood pulp fibers can be obtained from well known chemical processes such as the kraft and sulfite processes. In these processes, the best starting material is prepared from long fiber coniferous wood species, such as pine, douglas fir, spruce and hemlock. Wood pulp fibers can also be obtained from mechanical processes, such as chemimechanical, refiner mechanical, thermomechanical, ground wood, and chemithermomechanical pulp processes. Recycled or secondary wood pulp fibers and bleached and unbleached wood pulp fibers can be used. Details of the production of wood pulp fibers are well known to those skilled in the art. Also, natural and synthetic staple fibers, such as cotton, jute, ramie and rayon may be included in the mixture. In addition, more than one type of thermoplastic fiber[s] may be included in the mixture with some fiber having a melting point higher than the melting point of others. During thermobonding, these latter thermoplastic fibers are not melted, so that they retain their integrity and add to the strength of the resulting article. In addition, these latter fibers may be of a relatively long length in comparison to the other fibers for additional strength. Bicomponent thermoplastic fibers may also be included in the mixture.

The core may be formed from a mixture of thermoplastic material in fiber form in combination with one or more other fibers. These other fibers may include wood pulp fibers. While not structurally as strong, it is also within the scope of the present invention to include these added materials within coform cores formed in the manner described in U.S. Pat. Nos. 4,650,481 of O'Connor et al. and 4,609,580 of Rockett et al. and densified along at least an edge section in accordance with the present invention to help retain these materials in place. The core forming fibers, on the average, have length to diameter or cross sectional dimension ratios of greater than 5 and typically have ratios close to 100 or more.

The embodiments set forth above have been described for purposes of illustrating the present invention. Upon review of the foregoing specification, those of skill in the art will immediately realize that numerous variations, adaptations and modifications of the present invention are possible. However, such variations, adaptations and modifications will not depart from the spirit of the invention disclosed. Thus, in order to ascertain the full scope of the present invention, reference should be made to the appended claims.

## Claims

1. Apparatus for thermally bonding a web (50) comprised of at least one thermally fusible substrate comprising:
a heated rotary heat seal die (210);
a rotary heat seal anvil (200);
one or more take up rollers (52, 54, 56) for directing the web (50) into contact with the heated rotary heat seal die (210) at a point, angularly displaced from a nip point (B) wherein the heated rotary heat seal die (210) and anvil (200) seal the web (50); and
one or more web saver rollers (100, 110) movable from a first position to a second position and being disposed adjacent the heated rotary heat seal die (210);
such that when the web saver rollers (100, 110) are in the first position the web (50) is in contact with the heated rotary heat seal die (210), and when the web saver rollers (100, 110) are in the second position, the web (50) is lifted off the heated rotary heat seal die (210) and is disposed between the one or more take up rollers (52, 54, 56) and the web saver rollers (100, 110).

2. The apparatus of claim 1, comprising a first web saver roller (100) and a second web saver roller (110).

3. The apparatus of claim 2, wherein the anvil (200) and the die (210) each have a rotational axis and the rotational axis of the anvil and the rotational axis of the die (210) are connected by an alignment axis, wherein the web saver rollers (100, 110) are disposed on one side of the alignment axis in the first position and on a second side of the alignment axis in the second position.

4. The apparatus of claim 1, wherein the web (50) initially contacts the die (210) at a point (A) displaced 180° from the nip point (B).

5. The apparatus of claim 1, wherein the web (50) initially contacts the die (210) at a point displaced more than 180° from the nip point (B).

6. The apparatus of claim 5, further comprising an additional take up roller (58) disposed adjacent the die (210) and between the nip point (B) and a point at which the web (50) first contacts the die (210).

7. A method for thermally bonding a web (50) comprised of at least one thermally fusible substrate comprising the steps of:
directing the web (50) into contact with a heated rotary die (210) at a point (A) angularly displaced from a nip point (B) wherein the die (210) and an anvil (200) seal the web (50);
moving one or more web saver rollers (100, 110) from a first position and a second position, wherein in a first position the web (50) is wrapped around the die (210) to be preheated, and in a second position the web (50) is lifted off the die (210) and is stretched between one or more take up rollers (52, 54, 56, 58) and the web saver rollers (100, 110).

8. The method of claim 7, wherein the step of moving one or more web saver rollers comprises moving a first web saver roller (100) and a second web saver roller (110).

9. The method of claim 7, wherein the web (50) initially contacts the die (210) at a point (A) displaced 180° from the nip point (B).

10. The method of claim 7, wherein the web (50) initially contacts the die (210) at a point displaced more than 180° from the nip point (B).
